Europäisches Patentamt

European Patent Office

Office européen des brevets

(11) Publication number: **0 502 216 A1**

# EUROPEAN PATENT APPLICATION
## published in accordance with Art. 158(3) EPC

(21) Application number: 91917022.5

(22) Date of filing: 27.09.91

(86) International application number:
PCT/JP91/01289

(87) International publication number:
WO 92/06528 (16.04.92 92/09)

(51) Int. Cl.⁵: **H02K 9/19, H02K 9/22**

(30) Priority: **27.09.90 JP 255379/90**

(43) Date of publication of application:
**09.09.92 Bulletin 92/37**

(84) Designated Contracting States:
**DE IT**

(71) Applicant: **FANUC LTD.**
**3580, Shibokusa Aza-Komanba, Oshino-mura**
**Minamitsuru-gun, Yamanashi 401-05(JP)**

(72) Inventor: **NAKAMURA, Kosei, Fanuc Dai-3**
**Vira-karamatsu**
**3527-1, Shibokusa, Oshina-mura**
**Minamitsuru-gun, Yamanashi 401-05(JP)**
Inventor: **HAYASHI, Yoshiyuki**
**82-12, Subashiri, Koyama-cho**
**Suntou-gun, Shizuoka 410-14(JP)**
Inventor: **OKA, Hideki, Fanuc Dai-3**
**Vira-karamatsu**
**3527-1, Shibokusa, Oshino-mura**
**Minamitsuru-gun, Yamanashi 401-05(JP)**

(74) Representative: **Otte, Peter, Dipl.-Ing.**
**Tiroler Strasse 15**
**W-7250 Leonberg(DE)**

(54) COOLING DEVICE OF ROTATING MEMBER.

(57) This invention is directed to efficient cool a rotating member under an environment where it receives an excessive heat transfer, such as a main spindle equipped with a built-in motor. The rotor (12) of a built-in motor is directly fitted to the rear end side of a main spindle (10) of a machine tool, and the stator (14) is so disposed on a spindle housing (16) encompassing the main spindle (10) as to encompass the rotor (12). A ring-like member (18) is fixed to the inner peripheral surface of the spindle housing (16) in front of the stator (14), and encompasses the main spindle (10) with a suitable gap. A magnetic fluid (20), for example, a mixture of fine powder of iron oxide and a liquid such as water or a mineral oil, is filled into the gap defined between the main spindle (10) and the ring-like member (18). A cooling liquid passage (22) is disposed in the spindle housing (16) in the proximity of the stator (14) and the ring-like member (18).

# Fig.1

## TECHNICAL FIELD

The present invention generally relates to a device for cooling a rotating body, and particularly to a device for cooling a spindle of a machine tool. A device for cooling a spindle of a machine tool according to the invention is suitably applicable to a cooling device of a spindle directly combined with a rotor of an electric motor.

## BACKGROUND ART

A spindle of a machine tool having a built-in type electric motor (hereinafter called a built-in motor) as a rotational driving source is known, wherein a rotor of the built-in motor is directly fitted to a part of the spindle and a stator surrounding the rotor is disposed on a spindle housing enclosing the spindle. In such a spindle, the heat generated from the rotor of the motor is directly transferred to the spindle, and thus the latter is heated to high temperature which may influence the rigidity of the spindle or a workpiece installed thereon. Therefore, the spindle is generally cooled by blowing cooling air or pouring a cooling liquid such as an industrial oil thereover. The method of directly blowing the cooling air over the spindle has a problem in the producing of wind noise, and the method of directly pouring the cooling liquid thereover has a problem in the after treatment thereof.

## DISCLOSURE OF THE INVENTION

An object of the present invention is to provide a cooling device that can efficiently cool, by a simple construction, a rotating body under the environment and subjected to an excessive heat transfer, such as a spindle having the above-mentioned built-in motor.

To accomplish the above object, the present invention provides a device for cooling a rotating body, comprising an annular member consisting of a permanent magnet magnetized along a same direction as an axial direction of the rotating body, fixed on an inner periphery of a housing enclosing the rotating body, and arranged with a predetermined gap between the annular member and an outer periphery of the rotating body; a magnetic fluid, made by mixing a magnetic powder with liquid, filled into the gap defined between the annular member and the rotating body, and held in the gap by a magnetic force of the annular member; and a cooling means for cooling the annular member and absorbing heat generated by the rotating body via the annular member and the magnetic fluid, whereby the rotating body is cooled.

Furthermore, the present invention provides a device for cooling a spindle of a machine tool, the spindle being directly fitted to a rotor of an electric motor, comprising a spindle housing enclosing the spindle and having a predetermined annular chamber between the spindle housing and an outer periphery of the spindle; an annular member consisting of a permanent magnet magnetized along a same direction as an axial direction of the spindle, fixed on an inner periphery of the spindle housing in the annular chamber, and arranged with a predetermined gap between the annular member and the outer periphery of the spindle; a magnetic fluid, made by mixing a magnetic powder with liquid, filled into the gap defined between the annular member and the spindle, and held in the gap by a magnetic force of the annular member; and a cooling means for cooling the annular member and absorbing heat transferred from the rotor of the motor to the spindle via the annular member and the magnetic fluid.

According to the preferred embodiment of the present invention, a cooling device is provided wherein the cooling means comprises a cooling liquid passage means provided within the housing or spindle housing adjacent to the annular member, for circulating a cooling liquid.

The magnetic fluid is held in the gap between the annular member and the rotating body or spindle by a magnetic force of the annular member consisting of the permanent magnet, whereby the rotating body or spindle can be maintained in contact with the magnetic fluid during the rotation thereof, and efficiently perform a heat transfer between the rotating body and the magnetic fluid. At the same time, the magnetic fluid is in continuous contact with the annular member, whereby the heat is also transferred from the magnetic fluid to the annular member. Therefore, the heat of the rotating body or spindle is absorbed by the cooling means via the magnetic fluid and the annular member, and thus the rotating body or spindle is cooled.

## BRIEF EXPLANATION OF THE DRAWING

The foregoing and other objects, features, and advantages of the present invention will be described with relation to the embodiments shown in the accompanying drawing, in which;

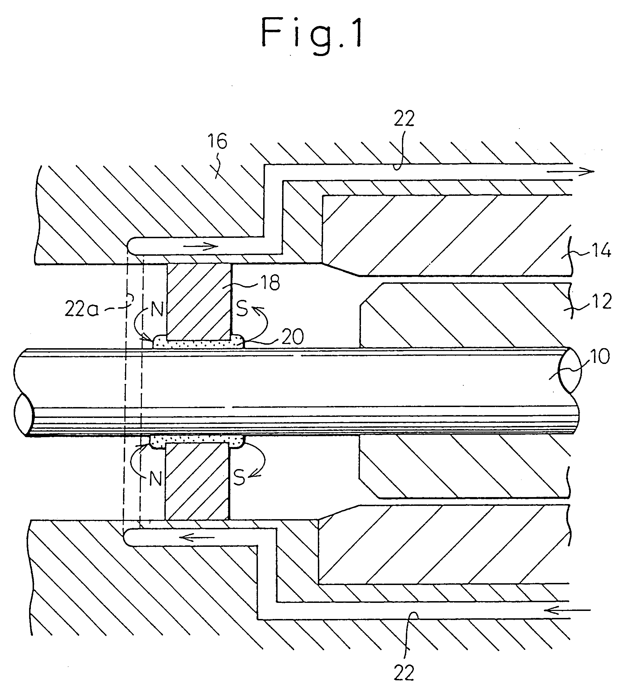

Fig. 1 is a longitudinal sectional view of the cooling device for a machine tool spindle according to the embodiment of the present invention.

## BEST MODE OF CARRYING OUT THE INVENTION

Referring to the drawing, Fig. 1 shows a machine tool spindle 10 having a built-in motor as a spindle driver motor. A rotor 12 of the built-in motor is directly fitted to the rear end portion of the spindle 10, and a stator 14 surrounding the rotor 12 is disposed on a spindle housing 16 enclosing the spindle 10. Therefore, the rotational power of the built-in motor is directly taken out of the spindle 10 and rotates a tool or workpiece (not shown) installed on the front end of the spindle 10.

The spindle 10 having above-mentioned construction is heated to a high temperature by a direct transfer of the heat generated by the rotor 12 of the built-in motor, and this may influence the rigidity of the spindle or the tool or workpiece installed on the front end thereof. Therefore, the spindle 10 is effectively cooled by the cooling device according to the present invention.

As shown in Fig. 1, the cooling device for the spindle according to the embodiment of the present invention comprises an annular member 18 arranged so as to surround the spindle 10, with a suitable gap between the annular member 18 and the outer periphery of the spindle 10, and fixed on the inner surface of the spindle housing 16 at the front position of the stator 14, a magnetic fluid 20 filled into the gap defined between the spindle 10 and the annular member 18, and cooing liquid passages 22 provided within the spindle housing 16. The annular member 18 consists of a permanent magnet and is magnetized along the same direction of the thickness as the direction of the axis of the spindle 10. The magnetic fluid 20 is made by mixing, for example, powder particles of iron oxide with a liquid such as water or mineral oil, and has the characteristics of both the magnetic substance and the liquid. Therefore, the magnetic fluid 20 is held in the gap between the spindle 10 and the annular member 18 by a magnetic force of the annular member 18, and is in continual contact with the spindle 10 and the annular member 18, regardless of the rotation of the spindle 10. The cooling liquid passage 22 is arranged within the spindle housing 16 adjacent to the stator 14 and the fixing position of the annular member 18, for circulating the cooling liquid. Preferably, a plurality of the cooling liquid passages 22 may be provided along the longitudinal direction of the spindle housing 16, and each of the passages 22 may be connected to one another at the front end thereof by connecting passages 22a. In this case, the direction in which the cooling liquid is circulated can be optionally set in all of the cooling liquid passages.

According to the above-mentioned cooling device of a spindle, the heat generated from the rotor 12 of the built-in motor when the spindle 10 rotates, and conducted along the axis direction of the spindle 10 by thermal conduction, is efficiently transferred to the magnetic fluid 20 directly in contact with the spindle 10. At the same time, the magnetic fluid 20 is also in direct contact with the annular member 18, whereby the heat transferred to the magnetic fluid 20 is also efficiently transferred to the annular member 18, whereby the annular member 18 is efficiently cooled, i.e. the heat is efficiently absorbed by the cooling liquid circulating in the cooling liquid passage 22. As described above, the rotor 12 and the spindle 10 as a rotating body are continuously thermally connected to the cooling liquid passages 22, the spindle housing 16, and the annular member 18 as a stational body, and air that would lower the heat transfer coefficient is not interposed therebetween, and therefore, an effective cooling is accomplished.

Furthermore, in the above embodiment, the heat generated by the stator 14 of the built-in motor is conducted by the spindle housing 16 and further absorbed by the cooling liquid in the cooling liquid passages 22. Thus the cooling device of a spindle according to the above embodiment can absorb the heat generated by the rotor 12 via the spindle 10, and at the same time, the heat generated by the stator 14 by the cooling liquid circulating in the same cooling liquid passage 22. Therefore, an effect is obtained in whereby the cooling process for the rotor and the stator of the built-in motor can be performed simultaneously by a simple construction.

As clear from the above descriptions, according to the invention, a rotating body subjected to thermal conduction, such as spindle of a machine tool having a built-in motor, can be effectively cooled by a simple construction.

LIST OF REFERENCE NUMERALS

| | |
|---|---|
| 10 | spindle |
| 12 | rotor |
| 14 | stator |
| 16 | spindle housing |
| 18 | annular member |
| 20 | magnetic fluid |
| 22 | cooling liquid passage |
| 22a | connecting passage |

**Claims**

1. A device for cooling a rotating body, comprising;

an annular member consisting of a permanent magnet magnetized along a same direction as an axial direction of said rotating body, fixed on an inner periphery of a housing enclosing said rotating body, and arranged with a predetermined gap between said annular member and an outer periphery of said rotating body,

a magnetic fluid, made by mixing a magnetic powder with liquid, filled into said gap defined between said annular member and said rotating body, and held in said gap by a magnetic force of said annular member, and

a cooling means for cooling said annular member and absorbing heat generated by said rotating body via said annular member and said magnetic fluid, whereby said rotating body is cooled.

2. A device for cooling a rotating body as claimed in claim 1, wherein said cooling means comprises a cooling liquid passage means provided within said housing and adjacent to said annular member, for circulating a cooling liquid.

3. A device for cooling a spindle of a machine tool, the spindle being directly fitted to a rotor of an electric motor, comprising;

a spindle housing enclosing the spindle and having a predetermined annular chamber between said spindle housing and an outer periphery of the spindle,

an annular member consisting of a permanent magnet magnetized along a same direction as an axial direction of the spindle, fixed on an inner periphery of said spindle housing in said annular chamber, and arranged with a predetermined gap between said annular member and the outer periphery of the spindle,

a magnetic fluid, made by mixing a magnetic powder with liquid, filled into said gap defined between said annular member and the spindle, and held in said gap by a magnetic force of said annular member, and

a cooling means for cooling said annular member and absorbing heat transferred from the rotor of the motor to the spindle via said annular member and said magnetic fluid.

4. A device for cooling a spindle of a machine tool as claimed in claim 1, wherein said cooling means comprises a cooling liquid passage means provided within said spindle housing and adjacent to said annular member, for circulating a cooling liquid.

5. A device for cooling a spindle of a machine tool as claimed in claim 4, wherein said cooling liquid passage means is extended adjacent to a stator of the motor arranged on said spindle housing and surrounding the rotor.

6. A device for cooling a spindle of a machine tool as claimed in claim 5, wherein said cooling liquid passage means comprising a plurality of cooling liquid passages extending adjacent to the stator of the motor and arranged separately from one another in a circumferential direction thereof.

# Fig.1

# INTERNATIONAL SEARCH REPORT

International Application No  PCT/JP91/01289

## I. CLASSIFICATION OF SUBJECT MATTER (if several classification symbols apply, indicate all) 6

According to International Patent Classification (IPC) or to both National Classification and IPC

Int. Cl⁵  H02K9/19, H02K9/22

## II. FIELDS SEARCHED

### Minimum Documentation Searched 7

| Classification System | Classification Symbols |
|---|---|
| IPC | H02K9/00, H02K5/00 |

### Documentation Searched other than Minimum Documentation
### to the Extent that such Documents are Included in the Fields Searched 8

| | |
|---|---|
| Jitsuyo Shinan Koho | 1926 - 1991 |
| Kokai Jitsuyo Shinan Koho | 1971 - 1991 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| Y | JP, A, 54-75006 (Toshiba Corp.), June 15, 1979 (15. 06. 79), (Family: none) | 1-6 |
| Y | JP, A, 56-37493 (Matsushita Electric Ind. Co., Ltd.), April 11, 1981 (11. 04. 81), (Family: none) | 1-6 |
| Y | JP, A, 57-122648 (Hitachi, Ltd.), July 30, 1982 (30. 07. 82), (Family: none) | 1-6 |
| Y | JP, U, 59-179460 (Yasukawa Electric Mfg. Co., Ltd.), November 30, 1984 (30. 11. 84), (Family: none) | 1-6 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| November 25, 1991 (25. 11. 91) | December 17, 1991 (17. 12. 91) |

| International Searching Authority | Signature of Authorized Officer |
|---|---|
| Japanese Patent Office | |

Form PCT/ISA/210 (second sheet) (January 1985)